Europäisches Patentamt

European Patent Office

Office européen des brevets

(19)

(11) Publication number: **0 198 716**
A2

# EUROPEAN PATENT APPLICATION

(12)

(21) Application number: 86302824.7

(22) Date of filing: 16.04.86

(51) Int. Cl.⁴: **G 02 F 1/13**

(30) Priority: 17.04.85 US 724217

(43) Date of publication of application: 22.10.86
Bulletin 86/43

(84) Designated Contracting States: AT BE CH DE FR GB IT LI
LU NL SE

(71) Applicant: LAAKMANN ELECTRO-OPTICS INC.,
33052 Calle Aviador, Suite B, San Juan Capistrano
California 92675 (US)

(72) Inventor: Levy, Michael Brent, 26472 Evergreen Road,
San Juan Capistrano California (US)
Inventor: Wilson, Stephen Sterling, 35120 El Niguel
Road, Elsinor California (US)

(74) Representative: Colgan, Stephen James et al,
CARPMAELS & RANSFORD 43 Bloomsbury Square,
London WC1A 2RA. (GB)

(54) Variable laser beam attenuation.

(57) A laser with a single internally or externally established
polarization plane is passed first through a liquid crystal attenu-
ation control and thence to a linear polarization filter whose
polarization plane is orthogonal to the plane of the laser. The
polarization of the beam is rotated an amount determined by
the voltage applied to the electrodes of the liquid crystal
device. The degree of such rotation determines the amplitude
of the component parallel to and hence passed by the linear
polarization filter.

EP 0 198 716 A2

## VARIABLE LASER BEAM ATTENUATION

### Field of the Invention

This invention relates to systems and methods for controlling the output of a laser.

### Background of the Invention

Numerous devices utilize low power, visible light lasers as range finders or visible markers, for example representing a target for lasers whose energy is outside the visible range. For instance, surgical laser systems employ $CO_2$ lasers in some instances, and YAG lasers in others, and both utilize energy outside the visible spectrum. Surgical systems for such lasers, then, include low power, visible light lasers (such as red light helium neon lasers) with a concurrent aim so that the physician may "see" where in fact the invisible energy from the power laser will address the patient. In such instances, mechanisms are provided for simultaneous manipulation of the visible light laser with the invisible light laser, and when the visible light point is properly aimed, energy is applied to the same point via the high power $CO_2$ or YAG laser.

Typically, users of these systems are observing the target point through range finder, endoscopic, or the like complex optical systems, and desire the facility to vary the intensity of the visible light spot. It is accordingly an object of the present invention to provide apparatus for selectively varying the attenuation of the visible laser beam in such range finder and targeting systems.

It is a further object that such beam attenuation be achieved not only economically, but more importantly without engendering beam directional deviation. Clearly, it is essential that the visible light target beam in all events remain aimed precisely to the actual target of the invisible light beam.

A number of prior art approaches have aimed toward achievement of these objects. In one prior art class, mechical choppers (such as rotating discs having apertures whose width varies with radius) produce an amount of attenuation related to the radial position of the disk across the beam. That is, in such systems, positioning the disc at one radius results in a particular beam passage to blockage ratio, whereas positioning the disk at a different position, and hence with the beam addressing a different radial position, results in yet a different passage to blockage ratio. The mechnical chopper method brings with it the customary reliability and stability problems of mechnical systems, and is in all events bulky, complex, and in its more successful aspects, expensive.

A similar class of prior art devices utilize a variable density pellicle, coated as a variable neutral density filter, which provides selectively variable attenuation when translated across the beam. Pellicle systems are extremely fragile and delicate, and share most of the disadvantages of mechanical chopper style systems.

Yet another class of prior art systems, featuring magneto optic and electro-optic devices (such as a Pockel cell) serve as variable polarization rotators according to the magnetic or electric field applied to the device. In such systems, a polarized laser beam may be variable attenuated

0198716

-3-

by passing the beam through the device and then through a fixed polarizer. Such systems involve high cost and bulk, and although optically and mechanically elegant, involve considerable sophistication relative to the relatively lesser overall importance of the beam attenuator in the total system design.

Still another prior art approach utilizes acousto-optic modulators, in which the changing of peak amplitude of the driving signal will cause the device to diffract more or less light out of the zeroth order, resulting in variable attenuation. These devices entail quite limited dynamic range, however, and also entail economic disadvantage.

It is accordingly yet another object of the present invention to equal or improve upon the functional operation of the foregoing classes of device, in simple, reliable, and inexpensive fashion.

## Summary of the Invention

The present invention is premised on utilization of a liquid crystal device for controlled rotation of the polarization plane of a laser beam. The liquid crystal device is situated intermediate the laser and a linear polarizing filter having its polarization plane oriented at a predetermined angle (preferably $90^{\circ}$) to the plane of the laser. The liquid crystal device produces a degree of polarization rotation of the beam related to the voltage applied to its electrodes. Hence, an amount of light is passed by the filter which is related to the degree of polarization rotation produced at the liquid crystal device.

In preferred embodiments, the liquid crystal device is

-4-

formed in a fashion similar to conventional liquid crystal displays, that is, a liquid crystal layer sandwiched between a pair of transparent indium tin oxide electrodes, through each of which the beam passes in sequence. The electrodes are provided with a driving signal having zero or low DC level, preferably a square wave having a 50% duty cycle and an amplitude which determines the degree of rotation of polarization by the liquid crystal itself. Features of the present invention include reliability, relatively low consumption of beam power, substantially hysteresis-free operation, and, perhaps most importantly, minimal discernible beam wander.

Description of the Drawings

Fig. 1 shows an illustrative embodiment of the principles of the present invention; and

Fig. 2 shows a plot of beam transmission vs. voltage in accordance with the principles of the present invention.

Best Mode of Carrying Out The Invention

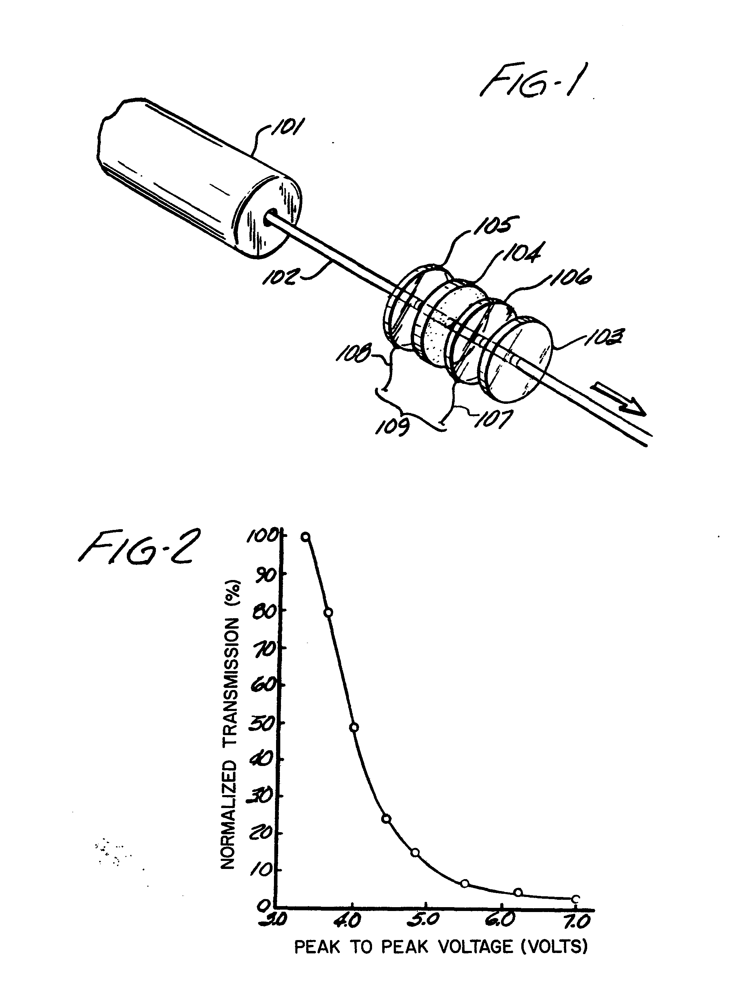

Referring to Fig. 1, there is shown a preferred embodiment of the present invention in partially exploded schematic form. In Fig. 1, the laser 101 is a helium neon laser the likes of which are commercially available from a number of sources. Other lasers will of course also be acceptable so long as their beam does not damage the liquid crystal device. The beam 102 emerging from the laser 101 has a single fixed polarization plane, (i.e. by internal or external polarization, as is known in the art), for example vertical in the isometric view of Fig. 1. The beam first passes through a liquid crystal device including a pair of electrodes 105 and 106 which sandwich a layer of liquid crystal 104. In practice, the liquid crystal device including the liquid crystal material 104 and electrodes 105 and 106 will be laminated tightly together, but they are exploded in Fig. 1 for ease of explanation. The electrodes 105 and 106 each have electrical leads 108 and 107, respectively, extending to a voltage supply 109 of conventional pedigree, but not shown therein in detail.

Having passed through the liquid crystal device 104, 105, and 106, the beam is passed through a fixed linear polarizer 103. In accordance with the principles of the present invention, the polarizer 103 has its polarization plane oriented at a particular, predetermined angle to the polarization plane of the beam 102 as it is emerging from the laser 101. Although the angular displacement between the polarization plane of the beam 102 emergent from laser 101 and that of the filter 103 may be at a variety of angles depending upon the needs of the designer, it will be clear that in preferred embodiments such angular displacement will be $90^{\circ}$; that is, in preferred embodiments the polarization plane of the filter 103 will be orthogonal to the polarization of beam 102 as it emerges from the laser 101. Alternatively, the process may be reversed, to range between zero and predetermined transmission conditions.

In an illustrative embodiment, the liquid crystal device 104, 105, 106 is embodied as a liquid crystal device commercially available from Seiko under the trade designation Model SP 539 PR. It will be apparent, however, that numerous alternative types of devices and sources of supply will be readily commercially available.

In accordance with the principles of the present invention, the beam may be attenuated through operation of the liquid crystal device 104, 105, 106 down to but a few percent of its initial value. The previously referenced Seiko device encounters about 20% beam power loss due to reflections at the interfaces of the laminated structure. Different liquid crystal devices may, however, be selected as desired with particular reference to this factor, but it is generally believed that a 20% loss at the attenuation device will be a tolerable situation. Optionally, AR coatings may reduce transmission loss to about 10%.

A variety of forms of voltage supply 109 may be utilized, but an important design consideration is the minimization of the DC component of the electrode drive signal, in order to prevent reduction of the electrodes 105 and 106 (typically transparent indium-tin-oxide) to a form which is not transparent(e.g. indium tin). Therefore, in preferred embodiments, the voltage supply 109 drives the electrodes 105 and 106 with a 50% duty cycle square wave of zero bias, beam transmission therethrough being varied in accordance with Fig. 2 by changing the peak to peak voltage of the drive signal. In particular, the plot of Fig. 2 represents normalized transmission from filter 103 as a percentage of beam intensity emergent from the laser, vs. peak to peak voltage of the drive signal from supply 109.

In general, it has been found more advantageous to vary peak to peak voltage of the drive signal than to vary the duty cycle of the drive signal, although the latter driving mechanism may be employed. A 100 Hz. square wave signal has been utilized with satisfaction in preferred embodiments, as has a 1000 Hz. signal. As will be apparent from consideration of Fig. 2, the most useful region of the curve begins in the range of 3 to 4 volts

LAK-11

peak to peak, and extends down in the range of 6 volts peak to peak, above which further peak to peak voltage changes have decidedly less effect on beam attenuation. Experimental results indicate no measurable beam wander over a projection distance of 40 feet, and no significant hysteresis effects. It is also interesting to note that although the device is being driven with an AC signal, its response, except at very low frequencies, shows little or no time dependence, that is, the device does not chop the beam.

It is noteworthy that embodiments of the principles of the present invention are physically substantially more compact than the classes of prior art device discussed hereinbefore, are totally nonmechanical and hence involve no moving parts, and yet cost, as of the date of filing hereof, in the range of 20% down even to 1% of the cost of the other hereinbefore described prior art approaches.

In operation, the liquid crystal device 104, 105, 106 rotates the polarization plane of incoming light by a full 90° if the electrodes are not energized at all. But for reflection losses of the device, full transmission results. When the electrodes 105 and 106 are fully energized, the electric field between them nullifies the optical activity of the liquid crystal layer 104 therebetween, so that no polarization rotation occurs, and thus the fixed polarizer 103 blocks all of the light incident thereon. Variable transmission is obtained in the region between full on and full off, generally in accordance with the transfer function shown in Fig. 2 for the Seiko liquid crystal device above-referenced. Such operation is of course dependent on the choice of angular displacements of the filter 103 relative to the polarization plane of the beam 102 emergent from the laser 101, as described hereinbefore.

In the event that uniform attenuation operation is required over a broad range of temperatures, it will be desirable to incorporate series combinations of silicon diodes into the circuit 107, 108, 109, which will provide a temperature coefficient selected in accordance with the temperature variation of the particular liquid crystal device being utilized, and the prospective ambient temperature operation range thereof.

It will be appreciated that the foregoing sets forth specific illustrative and preferred embodiments of the principles of the present invention, but that numerous alternative embodiments will occur to those of ordinary skill in the art without departure from the spirit or scope of the present invention.

We claim:

1.  In a system having a source of light linearly polarized in a given polarization plane, variable beam attenuation apparatus comprising:

a)  a fixed linear polarization filter having a polarization plane at predetermined angular displacement from said given plane;

b)  liquid crystal means, intermediate said source and said filter, for selectively rotating beam polarization from said given plane toward the polarizaton plane, increasing rotation providing a related increasing component parallel to the plane of said filter and hence transmitted thereby.

2.  Apparatus as described in claim 1 wherein said filter is oriented with its polarization plane orthogonal to said given polarization plane.

3.  Apparatus as described in claim 2 wherein said liquid crystal means comprises a liquid crystal layer laminated between substantially transparent electrodes, said beam passing respectively through a proximate one of said electrodes, said layer, and a distal one of said electrodes, thence to said filter.

4.  Apparatus as described in claim 3 and further including a source of voltage for driving said electrodes.

5.  Apparatus as described in claim 4 wherein said source of voltage comprises means for providing a time variant signal having minimal DC level, polarization rotation caused by said liquid crystal means being related to the peak to peak voltage of said signal.

FIG-1

FIG-2

PEAK TO PEAK VOLTAGE (VOLTS)